# FASCICULE DE BREVET EUROPEEN

(11) **EP 3 530 094 B1**
(45) Date de publication et mention de la délivrance du brevet: **09.04.2025**
(21) Numéro de dépôt: 19158724.5
(22) Date de dépôt: 22.02.2019
(51) Int. Cl.: A01C 7/20, A01C 7/04

(54) **MODULE DE SEMIS POUR MACHINE AGRICOLE COMBINÉE ET MACHINE AGRICOLE COMBINÉE COMPORTANT UN TEL MODULE**
SÄMODUL FÜR LANDWIRTSCHAFTLICHE MASCHINE UND KOMBINIERTE LANDWIRTSCHAFTLICHE MASCHINE MIT DIESEM SÄMODUL
SEEDING ELEMENT FOR AGRICULTURAL IMPLEMENT AND COMBINED AGRICULTURAL MACHINE HAVING SUCH ELEMENT

(30) Priorité: 26.02.2018 FR 1851646
(43) Date de publication de la demande: 28.08.2019
(73) Titulaire: Kuhn SAS, 67700 Saverne (FR)
(72) Inventeur: AUDIGIE, Jean-Charles, 67330 Bouxwiller (FR)
(74) Mandataire: Hager, Esther Evelyne

(56) Documents cités:
- EP-A1- 0 692 179
- EP-A1- 1 336 330
- EP-A1- 2 949 193
- CN-U- 201 571 311
- DE-A1- 4 231 136
- FR-A1- 3 026 913
- US-A1- 2018 139 894

## Description

La présente invention se rapporte au domaine technique général du machinisme agricole et en particulier au domaine du travail du sol et/ou du semis.

L'invention porte plus précisément sur une machine agricole combinée, associant une machine de travail du sol et une machine de semis.

La demande de brevet EP2949193A1 divulgue une machine portée combinée, associant une machine de travail du sol et un module de semis classique, de type barre de semis, pour semis en rangs. La machine de travail du sol et le module de semis sont fixés l'un à l'autre par un système de crochets mobiles et de pions. Ce semoir est notamment adapté aux céréales (blé, orge, etc.). Cette machine portée combinée présente l'avantage de pouvoir implanter les graines et de travailler le sol en un passage unique. Ceci permet notamment de limiter le temps de travail dans le champ et/ou de limiter l'assèchement avant implantation de la graine, par exemple lorsque les périodes favorables au semis sont courtes. Certaines espèces ne peuvent toutefois pas être semées par cette machine pour des raisons techniques, agronomiques et/ou économiques.

C'est par exemple le cas pour le maïs qui nécessite d'être semé graine à graine. Un semoir monograine porté tel que divulgué dans le document FR3026913A1 permet ce type de semis. Ce type de semoir présente une pluralité d'éléments semeurs disposés l'un à côté de l'autre et servant à individualiser les graines avant leur mise en terre. Ces éléments semeurs sont fixés individuellement à une poutre appartenant au châssis principal de la machine. Si cette machine permet de semer d'autres variétés que la machine combinée décrite ci-dessus, elle n'offre pas les avantages des machines combinées énoncés ci-dessus pour ces variétés découlant d'un semis effectué immédiatement après le travail du sol.

Aucune solution intégrée combinant un semoir monograine et une machine de travail du sol n'existe. Il existe donc un besoin en machines agricoles combinées, du type associant une machine de travail du sol et une machine de semis, à structures optimisées et plus polyvalentes.

L'invention porte donc sur une machine agricole combinée comportant un module de semis telle que décrite dans la revendication 1. Cette configuration permet de limiter la longueur du module de semis et donc d'en améliorer la compacité.

Selon l'invention, l'axe du pivot avant haut est disposé à l'avant d'un plan vertical passant par le point le plus en arrière du support d'accrochage.

Cette configuration est avantageuse en termes de réduction de longueur du module de semis qu'une disposition du pivot avant haut sous un plan vertical passant par le point inférieur du support d'accrochage.

Selon un mode de réalisation avantageux, les deux pivots avant sont disposés dans un même plan vertical transversal à une orientation longitudinale du module de semis. Cette configuration a l'avantage de permettre le déplacement des outils prévus pour être au contact du sol (organe d'implantation de graines, roue de jauge, organe de rappui, organe de fermeture de sillon) parallèlement à la surface du sol.

Selon un mode de réalisation avantageux, le montant avant est monté au support d'accrochage de manière amovible et/ou réglable. Ce type de montage offre une bonne versatilité à la machine combinée et permet d'envisager la mise en terre de différentes espèces avec la même machine. En variante, le montant avant est monté fixe au support d'accrochage.

Selon un mode de réalisation avantageux, le montant avant comporte un organe d'accrochage en sa partie supérieure, préférentiellement une mâchoire. Cet organe d'accrochage permet le montage de l'organe de semis sur le support d'accrochage du châssis. Cette configuration est par exemple utilisable pour un montage amovible et/ou réglable du montant avant au support d'accrochage.

Selon un mode de réalisation avantageux, le montant avant est configuré pour soutenir un organe d'enfouissement d'engrais en sa partie inférieure. Il est ainsi par exemple possible, dans le cas d'un semoir monograine, grâce à l'intégration optimisée de l'élément semeur dans le module de semis de conserver un organe d'enfouissement d'engrais à l'avant des éléments d'implantation de graines de l'élément semeur.

Selon l'invention, l'élément semeur est un élément semeur monograine.

Un tel module de semis monograine permet avantageusement, lorsqu'il est mis en œuvre dans une machine agricole combinée, de bénéficier des avantages d'une machine combinée du type associant une machine de travail du sol et une machine de semis, à savoir de semer son champ en une seule passe aussitôt le travail du sol accompli pour les espèces requérant un semis individualisé et donc de limiter le temps de travail dans le champ et/ou de limiter l'assèchement avant implantation de la graine lorsque les conditions météorologiques l'imposent.

Selon un mode de réalisation avantageux, le support d'accrochage est une poutre s'étendant sur toute la largeur de la machine.

Selon un mode de réalisation avantageux, le support d'accrochage présente une pluralité de portions d'accrochage.

Selon un mode de réalisation avantageux, le support d'accrochage présente au moins une portion d'accrochage à section en queue d'aronde. Cette configuration offre une très bonne stabilité d'accrochage.

L'invention porte sur une machine agricole combinée qui comporte au moins un module de semis et un module de travail du sol telle que décrit dans la revendication 1. Dans la machine agricole combinée, le module de semis est alors monté sur le module de travail du sol.

Grâce au gain en longueur sur le module de semis que permet le positionnement du pivot avant haut sous le point inférieur du support d'accrochage, et à l'avant du plan vertical passant par le point le plus en arrière du support d'accrochage, le moment (ou couple) de cabrage est réduit au maximum. Par moment de cabrage, il convient de comprendre : l'aptitude du poids du module de semis à faire tourner celui-ci autour de l'essieu arrière du tracteur. Le maintien du moment de cabrage à une valeur la plus basse possible permet de mettre en œuvre le module de semis décrit précédemment dans une gamme plus large de machines agricoles combinées que ne le permettent les structures de modules de semis classiques, de type barres de semis, pour machines combinées.

La machine agricole combinée ci-dessus est préférentiellement mais non limitativement une machine portée. Une telle machine portée est rendue possible par la limitation de la longueur du module de semis et la limitation du moment de cabrage induite par le module de semis sur l'essieu arrière du tracteur. Il est alors possible d'installer des éléments semeurs plus lourds que les barres de semis en rangs, par exemple un ou plusieurs élément(s) semeur(s) monograine(s). La meilleure intégration du module de semis dans la machine combinée permet alors de concevoir des machines jusqu'alors absentes du marché, comme par exemple une machine agricole combinée monograine portée.

La machine agricole combinée peut alternativement être une machine traînée ou semi-portée. On retrouve alors l'avantage de la limitation de longueur, avantageuse pour diminuer le rayon de braquage en bout de champ, par exemple.

D'autres caractéristiques et avantages de l'invention se dégageront des exemples de réalisation non limitatifs de l'invention qui vont suivre et des dessins annexés dans lesquels :
- la figure 1 est une vue de côté de la machine selon l'invention ;
- la figure 2 est une vue d'un détail de la figure 1.

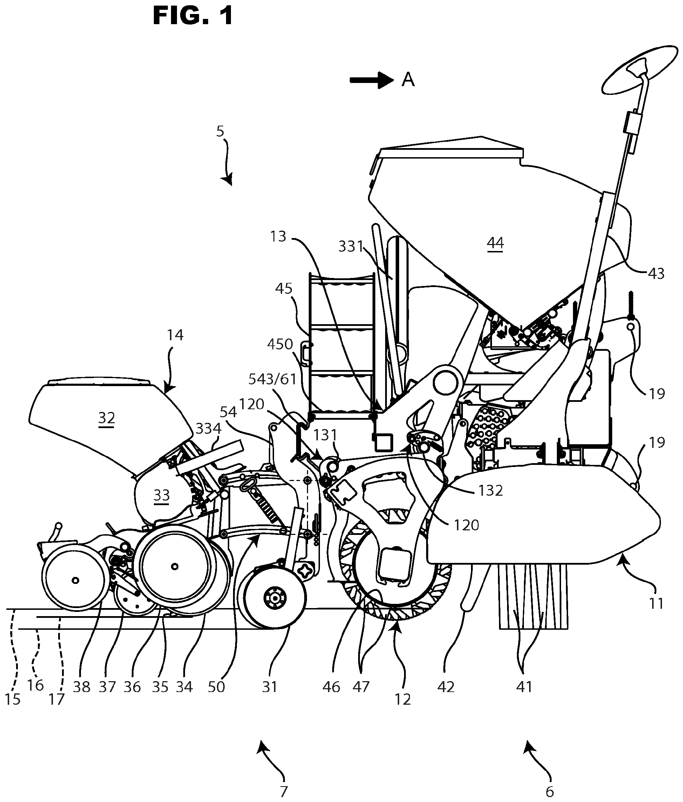

La figure 1 illustre une machine agricole combinée 5 associant un module de travail du sol 6 et une machine de semis 7. La machine 5 une machine portée, c'est-à-dire qu'elle est destinée à être monté à l'arrière d'un tracteur -non représenté- et portée par celui-ci. La machine de semis 7 est montée au module de travail du sol 6 grâce à une structure dont le principe et un mode de réalisation sont détaillés ci-après. Une direction d'avance A est représentée en figure 1. L'orientation longitudinale de la machine 5, c'est-à-dire son orientation avant-arrière, correspond à cette direction d'avance A.

Le module de travail du sol 6 comporte ici, et associe, une herse rotative 11 et un rouleau de tassage et d'émiettement 12 généralement appelé rouleau packer.

La herse rotative 11 est pourvue de dents 41, prévues pour décompacter le sol lorsqu'elles sont mises en rotation, et d'une planche niveleuse 42, pour contenir l'éventuelle éjection des mottes de terre et lisser le sol 15 derrière les dents 41. Un moyen de repérage de trace 43 est prévu sur la machine agricole combinée 5 ou sur le tracteur. Ici, le moyen de repérage de trace 43 est un traceur. Le moyen de repérage de trace 43 est ici monté sur la herse rotative 11. Le traceur 43 comporte une dent (ou un disque) qui sert à laisser une marque lors d'un passage dans le champ pour aider au positionnement de la machine 5 au passage suivant. En alternatives non représentées, le moyen de repérage de trace comporte un système GPS (par exemple disposé sur le tracteur) ou un autre système digital de repérage.

Le rouleau de tassage et d'émiettement 12 comporte un tambour 46 sur le pourtour duquel sont implantées des dents 47. Le tambour 46 est orienté transversalement à la direction d'avance A. Le rouleau de tassage et d'émiettement 12 peut être substitué par d'autres types d'organes de travail du sol, tels que des rouleaux à disques, à cage, hélicoïdaux, lisses, etc. selon les besoins liés au sol.

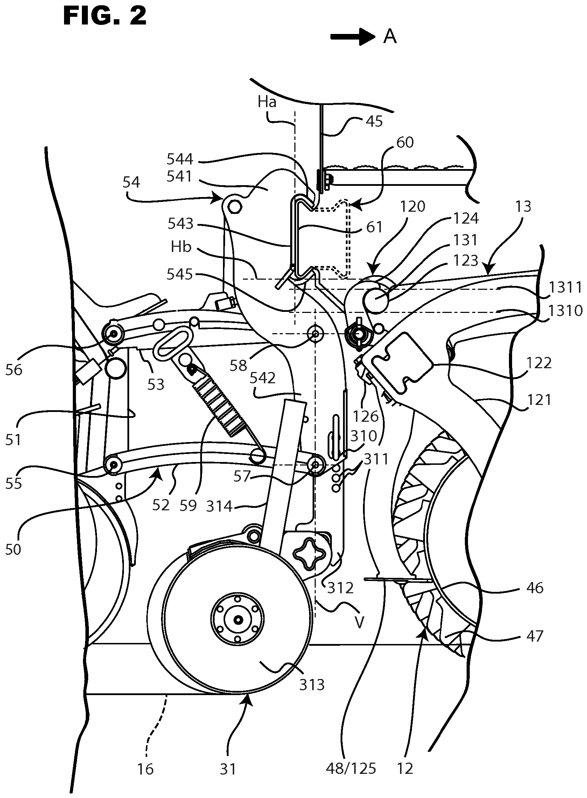

Le rouleau de tassage et d'émiettement 12 comporte un système d'accrochage 120 et une structure porteuse 121 (figure 2).

Le système d'accrochage 120 permet l'accrochage du module de semis 7 sur le module de travail du sol 6. Le système d'accrochage 120 présente ici des logements 123 et des crochets 124 prévus pour accueillir des moyens de positionnement arrière 131 et des moyens de positionnement avant 132 appartenant au châssis 13 du module de semis 7. Les moyens de positionnement arrière 131 et avant 132 sont ici des pions de forme tubulaire. Les crochets 124 sont ici prévus pour se refermer sur les moyens de positionnement arrière 131 et avant 132 lorsque ceux-ci sont disposés dans les logements 123. La coopération entre les moyens de positionnement arrière 131 et avant 132 et le système d'accrochage 120 permet la fixation effective du module de semis 7 sur le module de travail du sol 6 pour le travail.

La structure porteuse 121 présente au moins une poutre arrière 122. La poutre arrière 122 forme support d'attache pour un système de nettoyage 48. Le système de nettoyage 48 comporte par exemple une série de décrotteurs 125 intercalés entre les rangées de dents 47, pour décoller les résidus de terre pouvant adhérer au tambour.

Le système d'accrochage 120 et les moyens de positionnement 131 et 132 peuvent adopter une autre forme et/ou être disposés l'un 120 sur le châssis 13 et les autres 131, 132 sur le rouleau 12.

Le module de semis 7 comporte un châssis 13 et un élément semeur 14. L'élément semeur 14 est prévu pour être monté au châssis 13, à l'arrière de celui-ci, tel que représenté sur les figures. L'élément semeur 14 peut être monté sur le châssis 13 de manière fixe, démontable ou réglable, par exemple coulissant sur le châssis.

Le châssis 13 porte ici entre autres une trémie centrale 44 (optionnelle) contenant du fertilisant et une passerelle 450 munie d'une échelle 45. Le châssis 13 comporte un support d'accrochage 60. Le support d'accrochage 60 est ici une poutre en H, c'est-à-dire présentant une section plus large en deux de ses côtés parallèles qu'entre ces deux côtés. La poutre en H est pourvue d'une portion d'accrochage 61 orientée vers l'arrière de la machine 5. La portion d'accrochage 61 est ici trapézoïdale ou en forme de queue d'aronde. Le support d'accrochage 60 peut servir de support à la passerelle 450 pour des questions de praticité industrielle (réduction du nombre de pièces et leur coût, réduction du temps de montage et son coût).

L'élément semeur 14 représenté est un élément semeur monograine. Le module de semis 7 est donc un semoir monograine. L'élément semeur 14 comporte un organe d'implantation d'engrais 31 (optionnel), une trémie à chargement manuel 32 prévue ici pour contenir des graines, un organe de distribution de graines 33, un disque ouvreur 34, un organe d'implantation de graines 35 tel qu'un soc ou une dent, une roue de jauge 36, un organe de rappui 37 (optionnel), ici une roulette, une roue de fermeture de sillon 38. L'axe de rotation du disque ouvreur 34 se trouve dans l'encombrement de la roue de jauge 36. De plus, la position latérale de la roue de jauge 36 est telle que son point de contact avec le sol et aligné, en vue de côté, avec l'endroit où la graine va tomber au sol.

L'organe d'implantation d'engrais 31 est prévu pour implanter de l'engrais dans un premier sillon 16. L'engrais est acheminé pneumatiquement vers un conduit 314 (représenté partiellement en figures 1 et 2) de l'organe d'implantation d'engrais 31 depuis la trémie de fertilisation 44.

La trémie 32 alimente en graines l'organe de distribution 33. L'organe de distribution 33 est également alimenté en air via un conduit 334 depuis une turbine 331. L'organe de distribution 33 sépare les graines et les envoie, ici une à une, vers l'organe d'implantation 35. Les graines sont alors déposées dans un deuxième sillon 17 parallèle au premier sillon 16 formé par le disque ouvreur 34. La profondeur du sillon 17 est déterminée par la roue de jauge 36. Cette profondeur peut être ajustable pour l'adapter au type de graine semé. Une roulette de rappui 37 évolue dans le fond du sillon 17 et garantit le contact entre les graines et le sol. Enfin, la roue de fermeture de sillon 38 rabat de la terre dans le sillon 17 pour protéger les graines pendant la germination.

L'élément semeur 14 comporte un mécanisme déformable 50. Le mécanisme déformable 50 est un quadrilatère, préférentiellement du type parallélogramme tel que représenté sur les figures. Ici, le mécanisme déformable 50 comporte un montant arrière 51, un bras inférieur 52 et un bras supérieur 53, un montant avant 54 et un dispositif de réglage 59.

Le montant arrière 51, d'orientation sensiblement verticale, est partie intégrante de la structure portant la trémie 32, l'organe de distribution 33 et certains des éléments au contact du sol (ici non limitativement le disque ouvreur 34, l'organe d'implantation de graines 35, la roue de jauge 36, l'organe de rappui 37 et la roue de fermeture de sillon 38).

Le montant avant 54, également d'orientation sensiblement verticale, présente une partie supérieure 541 et une partie inférieure 542.

La partie supérieure 541 est pourvue d'un organe d'accrochage 543. L'organe d'accrochage 543 est de forme complémentaire au support d'accrochage 60 de manière à pouvoir garantir une fixation robuste de l'élément semeur 14 sur le châssis. Dans le mode de réalisation préférentiel représenté, l'organe d'accrochage 543 est une mâchoire. Cette mâchoire est pourvue de façon non limitative d'un crochet supérieur 544, formé de corps avec la partie supérieure 541, et d'un crochet inférieur 545. La mâchoire 543 est dimensionnée pour pouvoir se fixer à la portion d'accrochage 61. La fixation de la mâchoire 543 à la queue d'aronde s'effectue par serrage d'un élément de fixation non représenté, tel qu'un système vis-écrou.

La partie inférieure 542 porte des pivots avant 57 et 58. La partie inférieure 542 porte en outre en sa partie basse et de manière réglable l'organe d'implantation d'engrais 31 optionnel, par exemple par un système de perforations 311 et de goupille(s) 310 (figure 2).

L'organe d'implantation d'engrais 31 comporte ici un mât 312 et un outil d'enfouissement 313. Le mât 312 est ici, non limitativement, fiché par une première extrémité dans un logement interne du montant avant 54. Le mât 312 porte en une deuxième extrémité opposée à la première un outil ou plusieurs outils d'enfouissement 313, ici une paire de disques. L'organe d'implantation d'engrais 31 comporte encore un conduit d'alimentation 314 par lequel de l'engrais est guidé jusqu'à une sortie d'engrais (non représentée), disposée ici entre les disques 313. En variante non représentée, le ou les outil(s) d'enfouissement comporte(nt) une dent. Dans une autre variante non représentée, le mât 312 est monté contre ou autour de la partie inférieure 542 et/ou le système de liaison entre le montant avant 54 et l'organe d'implantation d'engrais 31 est différent du système de perforations 311 et de goupille(s) 310. Les variantes de réalisation de l'organe d'enfouissement d'engrais ci-dessus peuvent faire l'objet de différentes combinaisons le cas échéant.

Les deux bras 52 et 53 sont disposés l'un au-dessus de l'autre. En outre, ils sont préférentiellement sensiblement parallèles l'un à l'autre. Comme les bras 52 et 53 illustrés qui sont recourbés, il n'est pas nécessaire que les bras du mécanisme 50 soient rectilignes.

Le bras inférieur 52 est relié au montant arrière 51 par un pivot inférieur arrière 55, et au montant avant 54 par le pivot inférieur avant 57. Le bras supérieur 53 est relié au montant arrière 51 par un pivot supérieur arrière 56, et au montant avant 54 par le pivot supérieur avant 58.

Les pivots arrière 55 et 56 sont disposés l'un au-dessus de l'autre.

Les pivots avant 57 et 58 sont disposés l'un au-dessus de l'autre. Les pivots avant 57 et 58 sont ici, préférentiellement mais non limitativement, disposés sur un même plan vertical V transversal à la direction générale A.

Le dispositif de réglage 59 est disposé entre les bras 52 et 53. Le dispositif de réglage 59 permet de régler la force d'appui au sol de l'élément semeur 14. Le dispositif de réglage 59 est ici, non limitativement, un dispositif à ressort.

Le montant avant 54 est configuré de telle manière que l'axe de chacun des pivots avant 57 et 58 est disposé sous un plan horizontal Hb passant par le point inférieur de la portion d'accrochage 61. En d'autres termes, la portion d'accrochage 61 est disposée au-dessus des pivots avant 57 et 58. Cette configuration permet de positionner le pivot avant haut 58 plus en avant que ne le permettent les solutions classiques. Ainsi, l'élément semeur 14 dans sa totalité est avancé et permet de limiter la dimension longitudinale du module de semis 7. Dans le cas d'une machine portée dont tout le poids repose sur les essieux du tracteur en conditions de transport, le moment de cabrage sur l'essieu arrière du tracteur est ainsi limité, et le risque de basculement vers l'arrière du tracteur écarté.

De préférence, l'axe de chacun des pivots avant 57 et 58 est disposé à l'avant d'un plan vertical Ha passant par le point le plus en arrière de la portion d'accrochage 61. En d'autres termes, la portion d'accrochage 61 s'étend vers l'arrière au-delà du pivot supérieur avant 58. Dans le mode de réalisation représenté, la face arrière de la portion d'accrochage 61 en queue d'aronde est plane et verticale. Le plan vertical Ha passe donc par cette face arrière.

Cette configuration permet de pousser encore plus loin les avantages de la limitation de la longueur du module de semis et de la limitation du moment de cabrage. En effet, dans la configuration détaillée ci-dessus, le support d'accrochage 60 est plus haut qu'un support d'accrochage d'élément semeur monograine classique de sorte qu'il est possible d'avancer nettement la position des pivots avant 57, 58 vers l'avant de la machine 5.

Dans le mode de réalisation illustré, lorsque le module de semis 7 est monté sur le module de travail du sol 6, la portion d'accrochage 61 -et en particulier son point bas défini par le plan horizontal Hb- est disposée au-dessus de la poutre 122 et/ou des fixations 126 des décrotteurs 125 (figure 2). Dans le mode de réalisation représenté, également, la portion d'accrochage 61 -et en particulier son point bas défini par le plan horizontal Hb- sont disposés au-dessus du plan horizontal 1310 passant par le point bas des moyens de positionnement arrière 131, préférentiellement au-dessus du plan horizontal 1311 passant par le point haut des moyens de positionnement arrière 131. Préférentiellement, le support d'accrochage 60 et/ou la portion d'accrochage 61 est disposée intégralement au-dessus des moyens de positionnement arrière 131.

En variante non illustrée, le support d'accrochage 60 et/ou la portion d'accrochage 61 sont configurés différemment de l'exemple à queue d'aronde. Le support d'accrochage est par exemple une poutre à section carrée, rectangle, à double tube cylindrique, etc. De même, d'autres organes d'accrochage que l'organe d'accrochage décrit 543 peuvent être prévus, tel qu'un système de bridage enveloppant la poutre.

Dans une autre variante non illustrée, le support d'accrochage 60 n'est pas une poutre qui s'étend sur toute la largeur de la machine mais est formé d'une série de modules d'accrochage individuels dont la section est par exemple analogue en forme aux poutres décrites précédemment (section en queue d'aronde, carrée, etc.). Cette configuration limite la masse du support d'accrochage et permet donc d'alléger la charge sur essieu du tracteur dans le cas d'une machine combinée portée.

Les différents types de modules de semis peuvent être mis en œuvre non seulement dans une machine combinée portée, mais encore d'un autre type, tel que traînée ou semi-portée (c'est-à-dire portée au transport et roulante au travail).

En variante non illustrée, les trémies à chargement manuel 32 sont remplacées par des trémies relais. Ces trémies relais sont de plus petit volume que les trémies à chargement manuel. Les trémies relais font par exemple 2 à 15 litres contre 20 à 50 pour les trémies à chargement manuel. Les trémies relais font alors partie d'un système d'alimentation en graines à distance.

Les trémies relais peuvent alors être alimentées en graines depuis une trémie frontale. La trémie centrale 44 et l'organe d'implantation d'engrais 31 peuvent être maintenus ou non selon le besoin en fertilisation.

Les trémies relais peuvent également être alimentées en graines depuis la trémie centrale 44. Optionnellement, la fertilisation peut alors se faire depuis une trémie frontale.

L'étendue de la protection de la présente invention est définie par les revendications jointes.

## Revendications

1. Machine agricole combinée comportant au moins un module de semis (7) et un module de travail du sol (6), le module de semis (7) comportant un élément semeur monograine (14) et un châssis (13), l'élément semeur monograine (14) comportant un mécanisme déformable (50), le mécanisme déformable (50) présentant deux bras (52, 53), un montant avant (54) et deux pivots avant (57, 58), chacun des deux bras (52, 53) étant relié au montant avant (54) par un pivot avant (57, 58) respectif, le châssis (13) présentant un support d'accrochage (60), le montant avant (54) étant monté au support d'accrochage (60), où à l'axe du pivot avant haut (58) est disposé sous un plan horizontal (Hb) passant par le point inférieur du support d'accrochage, et où l'axe du pivot avant haut (58) est disposé à l'avant d'un plan vertical (Ha) passant par le point le plus en arrière du support d'accrochage (60).

2. Machine agricole combinée selon l'une des revendications précédentes, les deux pivots avant (57, 58) étant disposés dans un même plan vertical (V) transversal à une orientation longitudinale (A) du module de semis.

3. Machine agricole combinée selon l'une des revendications précédentes, le montant avant (54) étant monté au support d'accrochage (60) de manière amovible, réglable ou fixe.

4. Machine agricole combinée selon l'une des revendications précédentes, le montant avant (54) comportant un organe d'accrochage (543) en sa partie supérieure (541), préférentiellement une mâchoire.

5. Machine agricole combinée selon l'une des revendications précédentes, le montant avant (54) étant configuré pour soutenir un organe d'enfouissement d'engrais (31) en sa partie inférieure (542).

6. Machine agricole combinée selon l'une des revendications 1 à 6, le support d'accrochage (60) étant une poutre s'étendant sur toute la largeur de la machine.

7. Machine agricole combinée selon l'une des revendications 1 à 6, le support d'accrochage (60) présentant une pluralité de portions d'accrochage (61).

8. Machine agricole combinée selon l'une des revendications précédentes, le support d'accrochage (60) présentant au moins une portion d'accrochage (61) à section en queue d'aronde.

9. Machine agricole combinée selon l'une des revendications précédentes, le module de semis (7) étant monté sur le module de travail du sol (6).

10. Machine agricole combinée selon la revendication précédente, la machine agricole combinée étant une machine agricole combinée portée.

## Patentansprüche

1. Kombinierte landwirtschaftliche Maschine mit zumindest einem Sämodul (7) und einem Bodenbearbeitungsmodul (6), wobei das Sämodul (7) ein Einzelkornsäelement (14) und einen Rahmen (13) umfasst, wobei das Einzelkornsäelement (14) einen verformbaren Mechanismus (50) umfasst, wobei der verformbare Mechanismus (50) zwei Arme (52, 53), einen Vorderständer (54) und zwei Vorderzapfen (57, 58) aufweist, wobei jeder der beiden Arme (52, 53) durch einen jeweiligen Vorderzapfen (57, 58) mit dem Vorderständer (54) verbunden ist, wobei der Rahmen (13) eine Stütze (60) aufweist, wobei der Vorderständer (54) an der Stütze (60) montiert ist, wo die Achse des hohen Vorderzapfens (58) unter einer Horizontalebene (Hb) angeordnet ist, die durch den unteren Punkt der Stütze verläuft und wo die Achse des hohen Vorderzapfens (58) vor einer Vertikalebene (Ha) angeordnet ist, die durch den hintersten Punkt der Stütze (60) verläuft.

2. Kombinierte landwirtschaftliche Maschine nach einem der vorhergehenden Ansprüche, wobei die beiden Vorderzapfen (57, 58) in derselben Vertikalebene (V) quer zu einer Längsausrichtung (A) des Sämoduls angeordnet sind.

3. Kombinierte landwirtschaftliche Maschine nach einem der vorhergehenden Ansprüche, wobei der Vorderständer (54) lösbar, einstellbar oder fest an der Stütze (60) angebracht ist.

4. Kombinierte landwirtschaftliche Maschine nach einem der vorhergehenden Ansprüche, wobei der Vorderständer (54) an seinem Oberteil (541) ein Anhängeelement (543), vorzugsweise eine Backe, umfasst.

5. Kombinierte landwirtschaftliche Maschine nach einem der vorhergehenden Ansprüche, wobei der Vorderständer (54) so ausgebildet ist, dass er ein Düngervergrabungselement (31) an seinem Unterteil (542) abstützt.

6. Kombinierte landwirtschaftliche Maschine nach einem der Ansprüche 1 bis 6, wobei die Stütze (60) ein Balken ist, der sich über die gesamte Breite der Maschine erstreckt.

7. Kombinierte landwirtschaftliche Maschine nach einem der Ansprüche 1 bis 6, wobei die Stütze (60) eine Vielzahl von Aufhängeabschnitten (61) aufweist.

8. Kombinierte landwirtschaftliche Maschine nach einem der vorhergehenden Ansprüche, wobei die Stütze (60) mindestens einen Aufhängeabschnitt (61) mit schwalbenschwanzförmigem Querschnitt aufweist.

9. Kombinierte landwirtschaftliche Maschine nach einem der vorhergehenden Ansprüche, wobei das Sämodul (7) auf dem Bodenbearbeitungsmodul (6) montiert ist.

10. Kombinierte landwirtschaftliche Maschine nach dem vorhergehenden Anspruch, wobei die kombinierte landwirtschaftliche Maschine eine kombinierte landwirtschaftliche Anbaumaschine ist.

## Claims

1. Combined agricultural machine comprising at least one seeding unit (7) and a soil-working unit (6), the seeding unit (7) including a precision seeder element (14) and a chassis (13), the precision seeder element (14) including a deformable mechanism (50), the deformable mechanism (50) having two arms (52, 53), a front upright (54) and two front pivots (57, 58), each of the two arms (52, 53) being connected to the front upright (54) by a respective front pivot (57, 58), the chassis (13) having a hitching support (60), the front upright (54) being mounted on the hitching support (60), where the axis of the upper front pivot (58) is arranged underneath a horizontal plane (Hb) passing through the lower point of the hitching support, and where the axis of the upper front pivot (58) is arranged in front of a vertical plane (Ha) passing through the hindmost point of the hitching support (60).

2. Combined agricultural machine according to one of the previous claims, the two front pivots (57, 58) being arranged in a same vertical plane (V) that crosses a longitudinal orientation (A) of the seeding unit.

3. Combined agricultural machine according to one of the previous claims, the front upright (54) being mounted on the hitching support (60) in a movable, adjustable or fixed manner.

4. Combined agricultural machine according to one of the previous claims, the front upright (54) including a hitching element (543) on its upper part (541), preferably a jaw.

5. Combined agricultural machine according to one of the previous claims, the front upright (54) being configured to support a fertiliser burying element (31) in its lower part (542).

6. Combined agricultural machine according to one of the claims 1 to 6, the hitching support (60) being a beam that extends over the entire width of the machine.

7. Combined agricultural machine according to one of the claims 1 to 6, the hitching support (60) having multiple hitching portions (61).

8. Combined agricultural machine according to one of the previous claims, the hitching support (60) having at least one hitching portion (61) with a dovetail-shaped section.

9. Combined agricultural machine according to one of the previous claims, the seeding unit (7) being mounted on the soil-working unit (6).

10. Combined agricultural machine according to the previous claim, the combined agricultural machine being a mounted combined agricultural machine.
